# EUROPEAN PATENT APPLICATION

(11) **EP 3 751 412 A1**
(43) Date of publication of application: **16.12.2020**
(21) Application number: 19179350.4
(22) Date of filing: 11.06.2019
(51) Int. Cl.: G06F 8/41

(54) **A COMPUTER-IMPLEMENTED METHOD TO GENERATE AN OPC UA INFORMATION MODEL**

(71) Applicant: ENGEL AUSTRIA GmbH, 4311 Schwertberg (AT)
(72) Inventor: STEINER, Thomas, 4312 Riedl/Riedmark (AT); KONNERTH, Matthias, 4320 Perg (AT); HUBER, Christian, 4673 Gaspoltshofen (AT)
(74) Representative: Torggler & Hofinger Patentanwälte

(57) **Abstract**

A computer-implemented method to generate an OPC UA information model (6) of at least one selected machine component of a machine configuration of a machine based on a source code (1) representing the machine configuration, wherein the source code (1) is provided in a formal programming language with static type checking, comprising at least the following steps:
a. providing the source code (1) in electronic textual form
b. analyzing the source code (1) and extracting a data structure in the form of an abstract syntax tree (4) by use of a parser (3), wherein the abstract syntax tree (4) comprises all variables of the source code (1)
c. removing at least one variable from the abstract syntax tree (4) which is irrelevant with respect to the at least one selected machine component and/or with respect to a desired OPC UA client (11) to create a filtered abstract syntax tree (4) and transforming the filtered abstract syntax tree (4) into an OPC UA information model (6) of the at least one selected machine component
or
transforming the abstract syntax tree (4) into an OPC UA information model (6) of the at least one selected machine component, wherein the step of transforming the abstract syntax tree (4) includes removing at least one variable from the abstract syntax tree (4) which is irrelevant with respect to the at least one selected machine component and/or with respect to a desired OPC UA client (11).

The invention also contains a computer program, a computer and a machine carrying out such a method.

## Description

The present invention relates to the task of generating an OPC UA information model of at least one selected machine component of a machine configuration of a machine, in particular of a shaping machine or a peripheral device thereof, computer programs to encode all steps or parts of such a method, a computer hosting an OPC UA server and a machine having such a computer.

Machines, in particular shaping machines such as injection molding machines (IMM), comprise programmable logic controllers (PLC)s. The standard IEC 61131-3 provides a guideline for programming PLCs and contains guidelines for fundamental architectural concepts of PLC programs. However, PLC programs can be provided in any formal programming language, e. g. such as C or C++.

PLCs are used to govern different components of a machine, in particular of an IMM. E. g., to control an injection molding machine, its operator must be able to communicate with the machine control, which is made possible by a Human Machine Interface (HMI)

Typically, the HMI connects via a client to a proprietary server on the PLC. This server provides multiple services, e.g. a service for browsing data inside the PLC and accessing data inside the PLC.

This situation is not satisfying due to different reasons:
- Different vendors use different ways of controlling a machine via PLCs like presenting the visualization on IPCs. It would be advantageous, if interchanging the visualization client could be done in an easy way.
- The connection and control of peripheral devices runs through all layers of the machine program and the visualization. In the future, it should be easy to plug in peripheral devices without having to adapt great portions of the software.
- To meet the requirements of modern Industry 4.0 standards, machines of different vendors should be able to communicate with each other. In the future, a machine should utilize standardized machine-to-machine protocols to communicate with its environment.

To address these problems, it is known to replace the proprietary server on top of the PLC by an OPC UA implementation.

OPC UA (IEC 62541) is a platform-independent service-oriented architecture for machine-to-machine (M2M) communication, which in the last years, has basically established itself as the enterprise standard. OPC UA is platform independent and uses Ethernet as transport layer. This is beneficial for its cause, since Ethernet is used by many more industries and basically evolves for free. Its information model is clearly defined and, besides the usual payload, can hold meta- and diagnostic information. Its nodes are similar to objects and instances of object-oriented programming languages. It offers address-spaces to logically separate different modules, which corresponds roughly to the composition of an IEC 61131-3 application. An OPC UA information model consists of namespaces which hold all definitions and instances and can reference each other.

Any client can connect to an OCA UA server, regardless of whether it is a generic client or programmed for special purposes. E. g., with respect to visualization this allows to decouple the visualization from the proprietary protocol of the machine and make it interchangeable.

Values of interest can be requested by the client via client/server or publish/subscribe, which are state-of-the-art messaging patterns. Furthermore, OPC UA allows to plug in other OPC UA servers into the structure of the own OPC UA server, which allows to present a machine's information model combined with eventually connected peripheral devices or cluster more than one machine into a larger visualization system.

Unfortunately, OPC UA is presently not widely used with respect to PLCs.

EP 3 275 214 B1 provides a method to process control plant systems in an OPC UA based M2M network.

EP 3 182 235 B1 relates to a method for calling a function of a control program by means of an OPC UA call.

EP 2 715 461 B1 discloses a method to use OPC UA to automatically generate process graphics.

It is an object of the invention to provide a computer-implemented method for automatically generating an OPC UA information model of at least one selected machine component of a machine configuration of a machine, to provide computer programs to encode all steps or parts of such a method, a computer hosting an OPC UA server and a machine having such a computer.

This object is achieved by a computer-implemented method having the features of claim 1, a computer program having the features of claim 8 or 9, a computer having the features of claim 10 and a machine having such a computer. Preferred embodiments of the invention are defined in dependent claims.

In the present disclosure OPC UA is understood to be a platform-independent service-oriented architecture for machine-to-machine (M2M) communication as disclosed in: OPC Foundation, "What is OPC?" 2019. (online available: https: //opcfoundation.org/about/what-is-opc/) and as defined in standard IEC 62541.

The invention provides a computer-implemented method and a computer program to generate an OPC UA information model of at least one selected machine component of a machine configuration of a machine (or two or more selected machine components) based on a source code, wherein the source code is provided in a formal programming language with static type checking, preferably in the form of a IEC61131-3 program or a C/C++ program, representing the machine configuration, comprising at least the following steps:
a. providing the source code in an electronic textual form which can be parsed
b. analyzing the source code and extracting a data structure in the form of an abstract syntax tree (AST) via a parser
c. removing at least one variable from the AST which is irrelevant with respect to the at least one selected machine component and/or with respect to a desired OPC UA client to create a filtered AST and transforming the filtered AST into an OPC UA information model of the at least one selected machine component
   or
   transforming the AST into an OPC UA information model of the at least one selected machine component, wherein the step of transforming the AST includes removing at least one variable from the AST which is irrelevant with respect to the at least one selected machine component and/or with respect to a desired OPC UA client

Because the source code represents the machine configuration, a compiled version of the source code can be used to control and/or visualize the machine, in particular to control and/or visualize the at least one selected machine component.

In a formal programming language with static type checking, such as a programming language according to the IEC61131-3 standard or C/C++, the type of each variable is known at compile-time.

The advantage of the invention is to provide an information model that conforms to the OPC UA standard and represents the machine's configuration similar to the structure defined by the architect of the source code provided in the formal programming language.

Another advantage of the invention is that generation of the information model conforming to the OPC UA standard can be done during design time such that the information model is ready to use when booting up the machine's PLC (it is to be understood that each reference to the machine and its components can also be understood as a reference to a peripheral device of the machine and to the components of the peripheral device).

Another advantage of the invention is that variables that are not needed with respect to the selected machine component and/or a desired OPC UA client can be filtered away, no matter what kind of interface the vendor of the PLC provides, as the complete source code forms the basis for the transformation.

The invention makes use of the concept of visitor design patterns (cf. E. Gamma, Design patterns: Elements of reusable object-oriented software, 39th ed., ser. Addison-Wesley professional computing series. Boston: Addison-Wesley, 2011.) - in short: visitors - which is a way of separating an algorithm from an object structure on which it operates.

The invention also provides a computer-implemented method and/or a computer (e. g. an industrial controller) having a processor and a memory, wherein the computer is configured to load and host at least one OPC UA server which during run-time provides an OPC UA information model of at least one selected machine component of a machine configuration of a machine in an address space of memory allocated to the at least one OPC UA server, wherein the at least one OPC UA server is configured to connect to a memory in which a OPC UA information model created by an inventive method or computer program is stored in pre-generated form and to load the stored OPC UA information model into the address space of its allocated memory.

In the state of the art it was necessary for the at least one OPC UA server to access a PLC on which a compilation of a source code was stored and to generate the OPC UA information model during run-time by adding nodes of the OPC UA information model into the address space of the memory allocated to the at least one OPC UA server. The advantage of the invention is that the at least one OPC UA server can access a pre-generated OPC UA information model thereby reducing the time necessary for start-up.

The stored OPC UA information model can be loaded into an address space of the allocated memory of the OPC UA server independently of a state of or connection to a PLC, wherein in a memory of the PLC a compilation of a source code provided in a formal programming language with static type checking is stored, the source code being the basis for the generation of the OPC UA information model.

With respect to OPC UA the following terminology is used:

### OPC UA Information model (information model):

An information model is a structured representation of a machine. It should feature the machine's components and their respective building blocks, down to single variables. Depending on the purpose of the information model, only some components or parts of the machine need to be included. The invention prefers an OPC UA information model in the form of OPC UA XML in which every namespace resides in its own XML file, because XML is human readable, the schema definitions are specified in XML themselves and XML can be validated against a given schema.

An information model consists of multiple namespaces, together called the address space, holding the structure of the information to be given in the OPC UA information model. A namespace is a collection of elements and attributes defining a part of the information model. The structure of a namespace is organized hierarchically, resembling a file directory and can be browsed as such by any generic OPC UA client.

The hierarchy is built by references between nodes, where each node has a type and at least a unique identifier called Nodeld and a name. The top levels of the hierarchy are standardized for all servers.

Every OPC UA information model has a type section and an instance section, where the type section defines data- and object types based on the base data- and object types specified in the meta model, while the instance side uses these types to model the data structure itself.

In the following a first embodiment of the invention is described in detail with respect to a source code provided in the form of an IEC 61131-3 program.

With respect to the IEC 61131-3 program the following terminology is used:

### IEC Program Organizational Units (POU):

A POU is the smallest independent and compilable unit of a program. The compiler needs information about the interface of the POU to be able to link the compiled binaries later. There are three kinds of POU:
- Function (FUN): Similar to mathematical functions, these are static, deterministic and therefore lack any state information.
- Function block (FB): Work in a defined context, therefore having state information in their instance environment. They are essential means to structure PLC programs. They are called by PROGs and other function blocks and are allowed to call functions and function blocks themselves. The concept of instantiation is of great importance in the IEC standard and the main distinctive feature between the three types of POU. It is possible to instantiate variables by specifying the variable name and the data type. It's possible to instantiate function blocks the same way. After instantiation, the function block can be used and called within the POU, comparable to an object instance in common object-oriented programming languages.
- Program (PROG): They form the "head" of PLC programs and connect the rest of the program to the PLC periphery.

### Functional Unit (FU):

It has to be noted that it is possible to have more than one program running at a given time on a PLC. In the following, each such program will be called functional unit (FU).

A functional unit is a component that enables further structuring of programs by encasing POUs and FBs.

In a first approach according to the invention one namespace is created for each IEC FU that would hold all types and variable instances of that FU. This approach provides excellent cohesion, but the XML namespace model makes coupling of many namespaces difficult.

Therefore, the invention prefers to use a second approach in which all type definitions of all IEC FUs are collected in a single type namespace, while the variable instances of the different FUs reside in their own FU namespace each and reference the type definitions in the type namespace. The type namespace aggregates all data type definitions of all functional units of one machine. In OPC UA nodesets, Nodelds must always be unique. Hence, to avoid naming collisions between types and to improve readability, the STRING representation for Nodelds can be chosen. They are prefixed with the name of a type's original FU which results in a unique string identifier. An OPC UA nodeset references all namespaces it refers to in the beginning of the XML file. Since the type namespace houses all types extracted from the processed FUs, the only thing that remains in FU namespaces (one namespace per FU) are the variable instance declarations. These declarations can have primitive data types defined by the OPC Foundation like Int32 and Double residing in the OPC UA namespace with index "0", or they reference the custom types defined in the type namespace. As a result of this, a FU namespace does only reference the OPC namespace and the type namespace. This minimizes the complexity of the reference network while preserving the single responsibility principle, which means that every component in a software system should be responsible for one task only. In the IEC61131-3, this is given by encapsulation of FUs, while in the OPC UA information model it is achieved by separating components into individual namespaces.

Both the type namespace and the FU namespace are contained in the namespace container, which provides basic functionality to add and retrieve namespaces by their indexes as well as by their names. It furthermore controls the namespace indexes (which are integer values) and assigns one to every namespace that is added. Each module that needs access to one of the namespaces has to do so by using the namespace container.

In step a of the discussed embodiment of the invention the source code is provided in the form of an IEC61131-3 program in electronic textual form which can be parsed.

In step b of the invention a parser (different parsers can be used for different formal programming languages) is used to parse the source code to generate an abstract syntax tree (AST).

Further information regarding generating the AST can be found in the following documents which are incorporated herein by reference:
- H. Prähofer, F. Angerer, and R. Ramler, "Static Code Analysis for Kemro IEC 61131-3 Programs: Requirements, Methods, Implementation, and Results: Technical Report," Linz
- H. Prahofer, F. Angerer, R. Ramler, and F. Grillenberger, "Static code analysis of iec 61131-3 programs: Comprehensive tool support and experiences from large-scale industrial application," IEEE Transactions on Industrial Informatics, vol. 13, no. 1, pp. 37-47, 2017.

The AST is a tree structure which resembles the hierarchical structure of the program. Its root node represents the whole project while its leave nodes represent different functional units, IEC program organizational units contained in them, down to code blocks and variable declarations. There can be a class hierarchy, including specialized node types to represent the different elements of the IEC61131-3 language having a base class which every other type inherits from (called AbstractNode) and several subtypes that roughly classify the elements of the program, (e. g. ExprNode, the DeclNode, the StatNode and the ConfNode):
ExprNode and DeclNode are of primary interest for the invention because they hold expressions containing variable assignments and declarations containing type definitions. Nevertheless, the parser always builds the full AST before calling any rule.

### ExprNode:

The super type of all expressions. The invention's main interest is the initialization expression which can, amongst others, hold array initializations (ArraylnitExprNode) and structure initializations (StructlnitExprNode). These assign initial values to arrays and structs. Further interesting expressions are literal expressions (LiteralExprNode) that are used to represent literals of elementary data types.

### DeclNode:

The base class of all declarations. There are different variants and most of them are of interest for the invention. TypeSpecNode is the base class of all type specifications. It holds the structure of the type and may refer to other types. There are multiple places where TypeSpecNodes are used: In variable declarations and in type declarations where they define the structure of a named type. There are many variants of the TypeSpecNode. Another variant is the TypeNode which holds the connection between a named type and its declaration. While the parser parses, a type's declaration might not have been encountered when it is used. Therefore, the parser creates the TypeNode which is a placeholder that stores the name of the used type, to be linked later, as soon as the real type definition has been parsed.

The parser disassembles the source code of the IEC 61131-3 program and generates the AST from the information it gathered. The parser executes one or multiple rules on top of the AST. The AST itself is immutable to prevent rules from modifying it, since it is being reused for every rule. There do not have to be other rules, except in a preferred embodiment for preprocessing and checking the AST for errors that would prevent generation of a proper OPC UA model.

Before transforming the AST into an OPC UA information model or during transformation, at least one variable from the abstract syntax tree which is irrelevant with respect to the at least one selected machine component and/or with respect to a desired OPC UA client is removed from the AST.

An average machine program for an IMM has approximately 250.000 system variables. With respect to a selected machine component (e. g. visualization) just a fracture of these variables is of interest and the rest can be filtered away. As an example, it might be necessary to deal only with the HMI of an ejector of an IMM. In this case all variables of the AST which refer to components of the IMM other than those that are to be visualized with respect to the injector can be filtered away.

In addition, or alternatively, it might not be necessary to build an OPC UA information model with respect to all OPC UA clients of the whole machine. As an example, if the OPC UA server only deals with an HMI client, the OPC UA information model will only have to consist of those variables which are necessary for the HMI client.

In order to achieve filtering, one can annotate those variables that should remain in the AST or one could annotate those variables that should be removed from the AST. Formal programming languages allow annotating variables and their members to group them into predefined groups. E. g., with respect to the visualization system, variables relevant for the visualization can be assigned to the group "ComponentModel". Annotated system variables are easy to filter, but if the variables are declared with a struct type, their members can be annotated too. Since structs can have members that are struct types too, this requires recursive traversal of all variables. Additional complexity is created by variables that are not annotated themselves, but members of them are. These are required in the model as well.

Only the types that are referenced from variable instances are added to the type namespace, which greatly reduces the size of the type namespace. Types are always stored as whole, while variable members that were not annotated are missing in the intermediate representation.

The AST is constructed by recursively traversing the data types of all system variables contained in the source code.

In order to achieve filtering in the discussed example a visitor (in this example called InfrastructureBuilder) visits every node of the AST representing a FU. The visitor iterates all variables and builds the TypeNamespace by analyzing those variables that are annotated with a specific attribute (in this example the attribute "ComponentModel" has been chosen). The InfrastructureBuilder has unique handling methods for every data type. When a type is recognized, it is passed to the TypeNamespace which adds it to the collection corresponding to the type, after verifying that it has not been added before. Data types can be nested to an arbitrary depth. A special case is the definition of multidimensional arrays by letting an ArrayType reference another ArrayType. For such special cases, the InfrastructureBuilder has methods demerged from the main recursive function to reduce its complexity.

Visitors can be used both, for filtering the AST and subsequently transforming the AST into the OPC UA information model and transforming the AST into the OPC UA information model including filtering. Different visitors can be used for filtering and transforming.

With respect to the step of transforming the AST into the UPC OA information model the following is noted:
As mentioned above, the AST starts with a root node and comprises a plurality of subtrees which connect the root node to sub-nodes. Of course, each sub-node can function as sort of a root-node for child. Each node has a specific type and the visitor implements a transformation rule which has been specified for this specific type of node. E. g., the transformation rule for the struct type transforms a node of this type into an OPC UA object type, the transformation rule for a primitive variable transforms a node of this type into OPC UA variable. Further details are given below.

Every data type has its own class holding type specific information in the AST. Each data type inherits from an abstract base class AbstractDataType which contains all

In the following the rules for transforming the AST nodes into OPC UA nodes (node mapping) are described:

### FU Node:

The FU Node represents a container for IEC program organization units. The FU Node is mapped to an OPC UA Object which has the OPC UA FolderType as type definition. As for most UANodes, there are ReferenceTypes set, which define the dependencies between nodes.

### Primitives (PrimitiveType):

This data type represents all primitive types that are possible in OPC UA. The OPC UA has ReferenceTypes (not to be confused with ReferenceType data type below) that indicate a relation between Nodes. Since these do not have special properties and just like the PrimitiveTypes belong to the list of Aliases, they are also part of this class.

Primitive data types do not need to be persisted as own nodes, as they can be referenced from the OPC UA Datatypes defined in namespace index "0". However, if one of these types is used, an Alias element is created in the AliasTable section of the Nodeset. This section is created once per nodeset and allows to define string substitutions for Nodelds, to make the Nodeset file more readable. Aliases are strictly optional and there are no rules for what is included. On the instance side, only UAVariable nodes can use PrimitiveTypes. A variable instance specification features the DataType attribute which is mandatory and requires either a Nodeld or one of the previously defined Aliases.

E. g., a variable instance definition can be as follows: Its place in the hierarchy is defined by the ParentNodeld attribute, as well as the HasComponent ReferenceType that set it as subordinate to the Ejector object. It furthermore has a HasTypeDefinition which hints the information model that this node's data type is a subtype of BaseDataVariableType which has the fixed index "63". This variable instance would be exposed with Nodeld Ejector.sv_iSwitchShakeSprueDyn.

On the instance side, only UAVariable nodes can use PrimitiveTypes. A variable instance specification features the DataType attribute which is mandatory and requires either a Nodeld or one of the previously defined Aliases. Its place in the hierarchy is defined by the ParentNodeld attribute, as well as the HasComponent ReferenceType that set it as subordinate to the Ejector FU. It furthermore has a HasTypeDefinition which hints the information model that this node's data type is a subtype of BaseDataVariableType which has the fixed index "63".

### Named primitives (NamedPrimitive Type):

These are pseudonyms for PrimitiveTypes.The NamedPrimitiveType class functions as decorator for PrimitiveType, adding a name for identification and featuring a different Nodeld than the wrapped data type.

By concept, in the IEC 61131-3 named primitives are wrappers for other primitive data types, giving them names that fit better to the module or make the code more readable. This fact makes them predestined for the AliasTable as well as they already have the nomenclature consisting of the FU name and the type name. It can be observed, that these aliases point to the same Nodelds as the primitive data types above. A variable instance of a NamedPrimitiveType is defined like an instance of a PrimitiveType.

### OPC UA Reference Types:

These are a part of the OPC UA specification and are not to be mistaken with the ReferenceTypes generated from the IEC 61131-3 program. The OPC UA ReferenceTypes are used to define the structure of the information model and relationships between nodes. Since these types are defined in the OPC UA Types Nodeset, they reside in the OPC UA namespace with index "0" and only need Aliases to provide readable usability.

### Enumerations:

They are representations of EnumTypes and implemented as UADataTypes. This allows only UAVariables to reference them as DataType. Objects cannot have UADataTypes set as type. The Enumeration node has two references:
- HasSubtype: set to index "29" indicates that this Node is an Enumeration.
- HasProperty: Every Enumeration has an accompanying UAVariable that holds the localized texts 1 for OPC UA clients. It's Nodeld is equal to the Nodeld of the Enumeration but having "EnumStrings" concatenated. The HasProperty reference makes the association between the EnumStrings and the Enumeration.
Furthermore, the Enumeration has a Definition block that holds all values the it represents.

### Arrays:

Although the only way to specify an array in the IEC 61131-3 is to define an Array type, these have been completely omitted in the information model. The OPC UA allows the creation of array types and array variable instances, but it is not possible to assign attributes to the single indexes of an OPC UA array. To expose data later, every variable instance and every single index of an array must be independent.

Therefore, and because at compile time the array dimensions are known, Array types are reduced to simple variables of the original array's type, multiplied according to their dimensions and supplemented with their respective index to the name and Nodeld. As a result of this, there are no array type definitions in the type nodeset; array instances are created and can be found in the FU Nodeset only. The FUVisitor calls itself recursively, enabling it to create arrays of any data type, including StructTypes, Enumerations and other Arrays. As an example, an array of NamedPrimitiveType system.TMotionld is encased into an UAObject node. In other cases, the FUVisitor would have created Node types corresponding to their respective data types (in case of a StructType, including all its members).

### References:

Similar to the ArrayType, ReferenceTypes do not have a special representation in the type nodesest. Instead, they are flattened down to the datatype they really represent. Their real implementation happens in the FU nodesets in a recursive way. Since ReferenceTypes are just references to any other variable of a specified data type, they are always flat nodes, even when pointing to a StructType, because at compile time it is not known which variable instance they are referencing and constructing subordinate nodes would most probably create redundant nodes. Therefore, said flat nodes are created, according to the data type. Primitives and EnumTypes are represented as UAVariable nodes, while all other data types are UAObject nodes.

As for other data types, the reference's parent node is specified via the ParentNodeld and the HasComponent reference. By setting HasTypeDefinition, the superordinate group of the actual data type is specified. Furthermore, the ReferenceType introduces two new concepts:
- A custom OPC UA ReferenceType designated as HasRefToReference. It indicates that the node is a reference and specifies the Nodeld of the target variable.
- A new "primitive" data type called EMPTY. It is used as target for the HasRefToReference in cases where the target type is not known at the time of Nodeset generation.

### Structured data types:

StructTypes consist of a fixed amount of components that can have any of the other data types specified above. Therefore, they are the most complex data type presented in this chapter. Unlike one would think that StructTypes are constructed by using the XML hierarchy and adding the members to the UAObject node of the structure, they are built by backward referencing. Therefore, the ParentNodeld attribute and the HasComponent reference of member fields are defined to point back to the struct node. These inverse references support the reusability of OPC UA nodes by keeping them independent of other nodes, hence avoiding redundancy. Since these members can be structs again, the name of each subordinating member is pushed onto a Stack when descending into the recursion and removed when ascending. In the type nodeset, structured types are implemented as Object Types, held in an UAObjectType node. Apart from the node type, their implementation and structure are very similar to the instance side.

The invention is not limited to source code given in IEC61131-3 but the source code can be provided in any formal programming language with static type checking, such as, e. g., C or C++.

With respect to the C programming language, the data model is very different from C++, however, there is a close similarity to IEC61131-3 and the concepts discussed above for IEC61131-3 can be used if the source code is given in C.

In the following, a second embodiment of the invention is described with respect to a source code provided in the C++ language. It is to be understood that those details which have already been discussed with respect to IEC61131-3 and which can be used in an identical for C++ will not be repeated. It can be mentioned that transformation of a C++ source code into an OPC UA information model is more straightforward because both are object-oriented.

In step a, the source code is provided in C++.

In step b a parser usable for C++ is used to analyze the source code and to extract a data structure in the form of an abstract syntax tree, wherein the abstract syntax tree comprises all variables of the source code.

C++ and IEC61131-3 share a variety of syntactic and semantic elements. With respect to the shared syntactic and semantic elements it is possible to use the rules already discussed with respect to IEC61131-3 for C++. With respect to those syntactic and semantic elements which are unique to C/C++ new node types for the AST must be introduced (e. g. the IEC syntax tree has no notion of a "class" or a "namespace", but C++ does).

As an example, in order to transfer a C++-class into an OPC UA information model a suitable rule could be to transform a C++-class into an OPC UA object type and an instance of a C++-class into an OPC UA object. Filtering of the member variables of a class could be based on annotation in the source code.

As another example, a C++-namespace could be transformed into an OPC UA namespace.

As another example, the C++ concept of inheritance can be transformed into OPC UA inheritance.

The following applies to all embodiments of the invention irrespective of the programming language the source code is given in:
The OPC UA nodesets generated as described above are schematics that can be used to generate code for OPC UA servers. Different vendors offer different implementations - C/C++ is rather common, while some vendors also offer Java or Microsoft .NET implementations. The code generated by these software stacks can be compiled by appropriate compilers and executed afterwards.

These executables expose the whole information model as defined in the OPC UA nodeset. Any generic OPC UA client can connect to the server and browse the information model.

In a preferred embodiment, the machine is a shaping machine. In a preferred embodiment the shaping machine for which the OPC UA model is generated is an injection molding machine (preferably an injection molding machine for plastics).

In a preferred embodiment, the machine is a peripheral device of a shaping machine, in particular a handling device of an injection molding machine.

Embodiments of the invention are discussed in connection with the figures which show:
- Fig. 1: an overview of the inventive method
- Fig. 2a,b: state of the art regarding the functioning of a PLC (Fig. 2a) and the functioning of a PLC provided with a OPC UA information model created by the invention (Fig. 2b), respectively

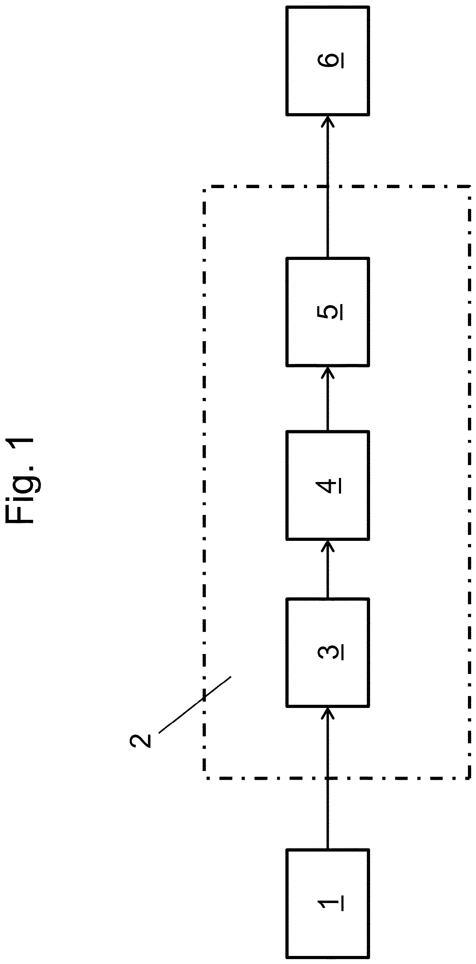

Fig. 1 shows the inventive method implemented by a computer program 2. A source code 1 which is provided in a formal programming language is parsed by a parser 3 which generates an AST 4. A rule engine 5 of the computer program 2 filters and transforms the AST 4 into an OPC UA information model 6. This OPC UA information model 6 can be loaded by any OPC UA server 7. OPC UA clients 11 can access the OPC UA server 7 provided with the OPC UA information model 6.

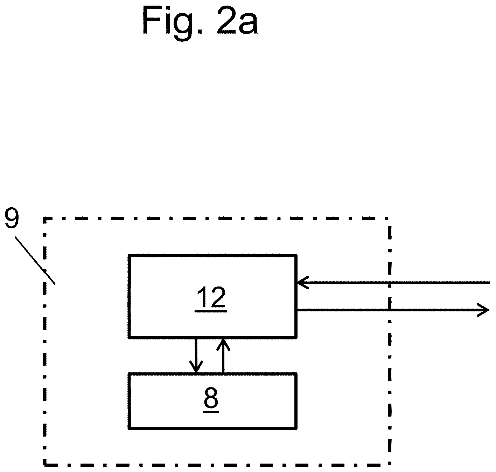

Fig. 2a shows a PLC 9 according to the prior art having a server 12 which inputs information and commands to an IEC61131-3 program 13 and outputs information from the IEC61131-3 program 13. The server 12 differs from vendor to vendor as it is proprietary software.

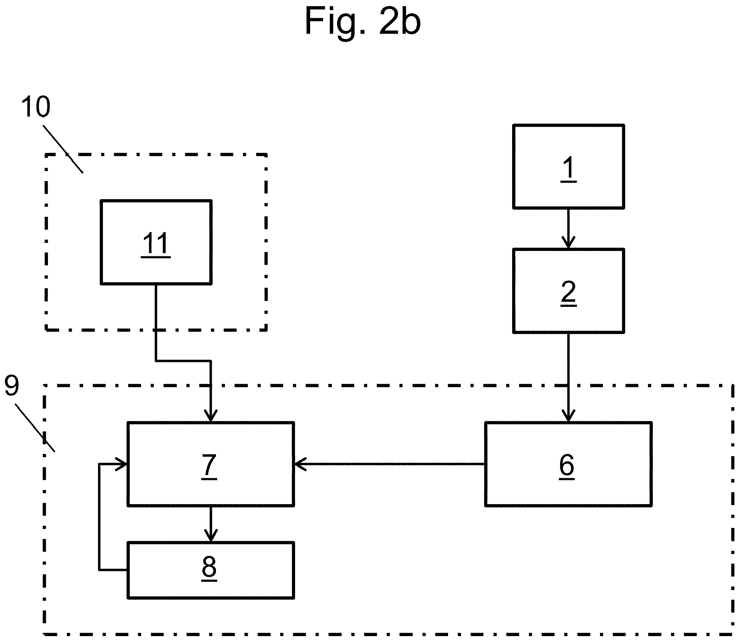

Fig. 2b shows the situation according to the invention:
An OPC UA server 7 is loaded into a memory of the PLC 9 and is provided with an OPC UA information model 6 created by the invention, which transforms a source code 1 with help of a computer program 2.

The OPC UA server 7 inputs information and commands to an IEC61131-3 program 8 and outputs information from the IEC61131-3 program 8. The OPC UA information model 6 can be downloaded into the PLC at design time.

As an example, an OPC UA client 11 of an HMI 10 is shown which consumes the OPC UA information model 6 of the OPC UA server 7.

### List of reference signs:

- 1: source code
- 2: computer program
- 3: parser
- 4: AST
- 5: rule engine
- 6: OPC UA information model
- 7: OPC UA server
- 8: IEC61131-3 program
- 9: PLC
- 10: HMI
- 11: OPC UA client
- 12: proprietary server

## Claims

1. A computer-implemented method to generate an OPC UA information model (6) of at least one selected machine component of a machine configuration of a machine based on a source code (1) representing the machine configuration, wherein the source code (1) is provided in a formal programming language with static type checking, comprising at least the following steps:
a. providing the source code (1) in electronic textual form
b. analyzing the source code (1) and extracting a data structure in the form of an abstract syntax tree (4) by use of a parser (3), wherein the abstract syntax tree (4) comprises all variables of the source code (1)
c. removing at least one variable from the abstract syntax tree (4) which is irrelevant with respect to the at least one selected machine component and/or with respect to a desired OPC UA client (11) to create a filtered abstract syntax tree (4) and transforming the filtered abstract syntax tree (4) into an OPC UA information model (6) of the at least one selected machine component
or
transforming the abstract syntax tree (4) into an OPC UA information model (6) of the at least one selected machine component, wherein the step of transforming the abstract syntax tree (4) includes removing at least one variable from the abstract syntax tree (4) which is irrelevant with respect to the at least one selected machine component and/or with respect to a desired OPC UA client (11).

2. A computer-implemented method using a computer having a processor and a memory, wherein the computer is configured to host at least one OPC UA server (7), and to provide an allocated memory to the at least one OPC UA server (7), comprising at least the following steps:
- providing a memory on which an OPC UA information model (6) generated in a method according to claim 1 is stored
- loading of the stored OPC UA information model (6) into an address space of the allocated memory

3. Method according to the preceding claim, wherein the stored OPC UA information model (6) is loaded into an address space of the allocated memory of the OPC UA server (7) independently of a state of or connection to a programmable logic controller (9), wherein in a memory of the programmable logic controller (9) a compilation of a source code (1) provided in a formal programming language with static type checking is stored, the source code (1) being the basis for the generation of the OPC UA information model (6).

4. Method according to at least one of the preceding claims, wherein the source code (1) is provided in C or C++.

5. Method according to at least one of claims 1 to 3, wherein the source code (1) is provided in IEC61131-3 standard.

6. Method according to at least one of the preceding claims, wherein at least one visitor design pattern is used to create the filtered abstract syntax tree (4) in step c of claim 1 and/or to transform the abstract syntax tree (4) into the OPC UA information model (6).

7. Method according to at least one of the preceding claims, wherein in a further step the OPC UA information model (6) is implemented into an OPC UA server (7) of a programmable logic controller (9).

8. A computer program (2) comprising instructions which, when the program is executed by a computer, causes the computer to carry out the method according to at least one of claims 1 to 7.

9. A computer program comprising instructions which, when the program is executed by a computer causes the computer to accept an abstract syntax tree (4) as an input and to carry out step c of the method of claim 1 based on the inputted abstract syntax tree (4).

10. A computer having a processor and a memory, wherein the computer is configured to load and host at least one OPC UA server (7) which during run-time provides an OPC UA information model (6) of at least one selected machine component of a machine configuration of a machine in an address space of memory allocated to the at least one OPC UA server (7), **characterized in that** the at least one OPC UA server (7) is configured to connect to a memory in which a OPC UA information model (6) created by a method according to one of claims 1 to 7 or a computer program according to claim 8 or 9 is stored in pre-generated form and to load the stored OPC UA information model (6) into the address space of its allocated memory.

11. Machine, in particular shaping machine, having a computer according to the preceding claim.
